# EUROPEAN PATENT APPLICATION

(11) **EP 4 651 059 A1**
(43) Date of publication of application: **19.11.2025**
(21) Application number: 24175419.1
(22) Date of filing: 13.05.2024
(51) Int. Cl.: G06Q 30/0241

(54) **METHOD AND SYSTEM FOR CREATING AN ADVERTISEMENT BASED ON USER INPUT**

(71) Applicant: Top Victory Investments Limited, Kwun Tong, Kowloon 999077 (HK)
(72) Inventor: JAIN, Vikas, 560045 Bangalore (IN)
(74) Representative: Page White Farrer

(57) **Abstract**

A method for creating an advertisement based on user input includes displaying, by a public display device, a link for inputting user-input text comments about a predetermined merchandise; in response to receipt of a user-input text comment, performing, by a server, a filtering operation so as to obtain a filtered input string; feeding the filtered input string into a generative neural network model, so as to obtain an advertising text file; generating a user-related advertisement for the predetermined merchandise based on at least the advertising text file, and transmitting the user-related advertisement to the public display device for displaying.

## Description

The disclosure relates to a method and a system for creating an advertisement based on user input.

In the field of marketing, providing advertisements to people in public places is very crucial, as people generally spend a large amount of time in different public places (e.g., public transit, sport arenas, restaurants, malls, airports, hotel lobbies, etc.). As such, various advertisement providers always try to figure out innovative ways to reach to the public more effectively. Typically, each of the public places may install one or more screens to display different advertisements in addition to other multimedia content.

Therefore, an object of the disclosure is to provide a method that is capable of creating an advertisement based on user input.

According to one embodiment of the disclosure, there is provided a method as claimed in Claim 1.

Another object of the disclosure is to provide a system that is configured to implement the above-mentioned method.

According to one embodiment of the disclosure, there is provided a system as claimed in Claim 9.

Other features and advantages of the disclosure will become apparent in the following detailed description of the embodiment(s) with reference to the accompanying drawings. It is noted that various features may not be drawn to scale.
Figure 1 is a block diagram illustrating components of a system for creating an advertisement based on user input according to one embodiment of the disclosure
Figure 2 is a flow chart illustrating steps of a method for creating an advertisement based on user input according to one embodiment of the disclosure.
Figure 3 illustrates an exemplary input website according to one embodiment of the disclosure
Figure 4 illustrates an exemplary filtering neural network model used for the filtering operation according to one embodiment of the disclosure.
Figure 5 illustrates an exemplary generative neural network model according to one embodiment of the disclosure.
Figures 6 to 8 illustrate exemplary user-related advertisements that are displayed by a public display device.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

Throughout the disclosure, the term "coupled to" or "connected to" may refer to a direct connection among a plurality of electrical apparatus/devices/equipment via an electrically conductive material (e.g., an electrical wire), or an indirect connection between two electrical apparatus/devices/equipment via another one or more apparatus/devices/equipment, or wireless communication.

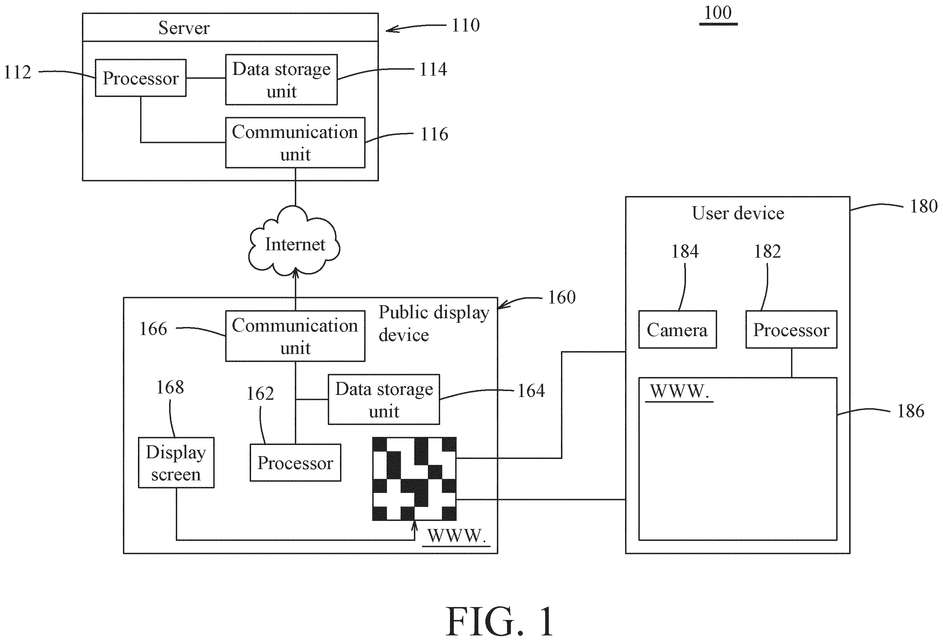

Figure 1 is a block diagram illustrating components of a system 100 for creating an advertisement based on user input according to one embodiment of the disclosure. The system 100 includes a server 110 and a public display device 160 that is in communication with the server 110.

In this embodiment, the server 110 includes a processor 112, a data storage unit 114, and a communication unit 116.

The processor 112 may be embodied using a central processing unit (CPU), a microprocessor, a microcontroller, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), and/or etc.

The data storage 114 is connected to the processor 112, and may be embodied using, for example, random access memory (RAM), read only memory (ROM), programmable ROM (PROM), firmware, flash memory, etc. In this embodiment, the data storage 114 stores a software application and a number of neural network models therein. The software application includes instructions that, when executed by the processor 112, cause the processor 112 to implement the operations as described below. Each of the neural network models may be embodied using a CNN, RNN or other form of neural network, and may be pre-trained to perform specific operations as described below. In some embodiments, the data storage 114 may include a database that stores a plurality of preset multimedia files. Each of the preset multimedia files may be a preexisting advertisement for a predetermined merchandise.

It is noted that throughout the disclosure, the term "merchandise" may refer to a brand of products or service that is provided by a company or a store. Typically, advertisements are made to promote one or more specific merchandise.

The communication unit 116 is connected to the processor 112, and may include one or more of a radio-frequency integrated circuit (RFIC), a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G), the fourth generation (4G) or fifth generation (5G) of wireless mobile telecommunications technology, or the like. The communication unit 116 enables the server 110 to communicate with the public display device 160 via a wireless network (e.g., the Internet).

The public display device 160 may be embodied using a display screen, a projector, or other devices that is capable of displaying information thereon. In some embodiments, the public display device 160 is installed in a public location (which may be a location where a large number of people may pass by or gather at, such as a public transit, sport arenas, restaurants, malls, airports, hotel lobbies, etc.). It is noted that in other embodiments, the server 110 may be simultaneously in communication with a plurality of public display devices 160, each being embodied using one of the above devices and installed in a specific public location.

The public display device 160 includes a processor 162, a data storage unit 164, a communication unit 166, and a display screen 168.

The processor 162 may be embodied using the same components as the processor 112. The data storage unit 164 is connected to the processor 162, may be embodied using the same components as the data storage unit 114, and may store one or more multimedia files that can be outputted. The communication unit 166 is connected to the processor 162, and may be embodied using the same components as the communication unit 116. The display screen 168 is connected to the processor 162, and is controlled by the processor 162 to display the multimedia file. In some embodiments, the public display device 160 may further include an audio outputting component 170 for outputting an audio part of the multimedia file. In some examples, the multimedia file may be an advertisement video, and the data storage unit 164 may store a plurality of multimedia files, and the processor 162 may control the display 168 to display the multimedia files in a loop. Each advertisement video may be associated with a product.

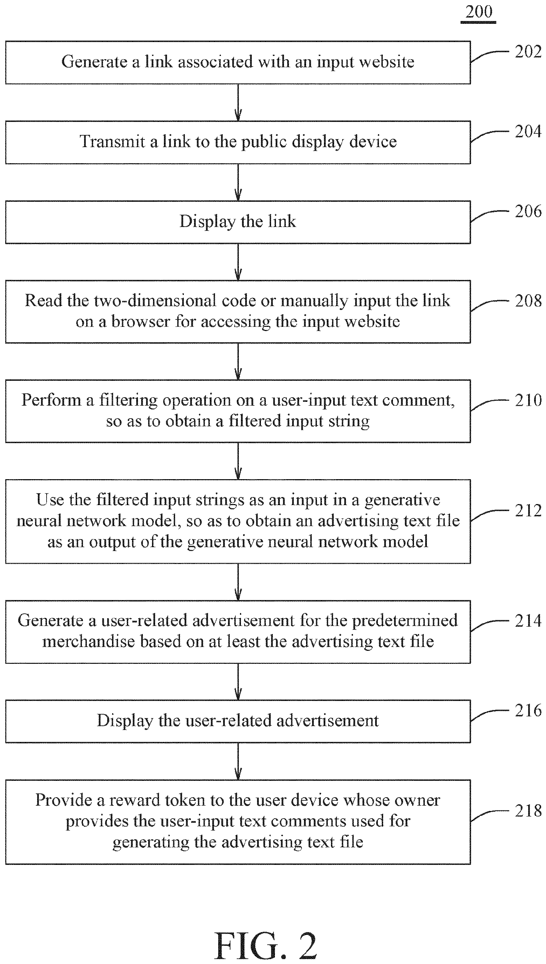

Figure 2 is a flow chart illustrating steps of a method 200 for creating an advertisement based on user input according to one embodiment of the disclosure. In this embodiment, the method is implemented using the system 100 as described in Figure 1.

In use, when a party associated with the server 110 (e.g., an advertising company) intends to create a user-related advertisement for a predetermined merchant or product, the party may operate the server 110, so as to control the processor 112 to transmit a link to the public display device 160 via the communication unit 116 in step 202. The link (e.g., a website address) is associated with an input website for inputting user-input text comments about the predetermined merchandise.

In response to receipt of the link, in step 204, the processor 162 of the public display device 160 controls the display 168 to display the link. It is noted that in some embodiments, the processor 112 may further transmit one of the preset multimedia files stored in the data storage 114 to the public display device 160 via the communication unit 116, and the link may be displayed alongside the one of the preset multimedia files that is an advertisement of the predetermined merchandise.

In some embodiments, in addition to the link, the processor 162 may further encode the link in a two-dimensional code (such as a quick response (QR) code, a barcode, etc.), and controls the display 168 to further display the two-dimensional code. The two-dimensional code may be readable by an electronic device using a camera (and optionally, a code reading software application), while the link may be seen by a passerby who does not have an electronic device with a camera, and may be manually inputted by the passerby.

In some embodiments, the processor 162 of the public display device 160 controls the display 168 to further display a text message for encouraging the passerby to interact with the link or the two-dimensional code. In some embodiments, the text message may include texts such as "Please tell us about your experience using the product! You may win a prize if your comments are selected." In some embodiments, the processor 162 may control the audio outputting component 170 for outputting an audio file that reads the text message out loud. That is to say, the public display device 160 installed in the public location may be used for attracting passersby and encourage them to use the link or the two-dimensional code to access the input website.

When the passerby intends to access the input website, in step 208, he/she may operate a user device 180 (e.g., a smartphone, a tablet, a laptop, etc.) to read the two-dimensional code using a camera 184 so as to launch a browser for accessing the input website, or to manually input the link on the browser. After the passerby successfully accesses the input website, a processor 182 loads the input website, and controls a display 186 to display the input website.

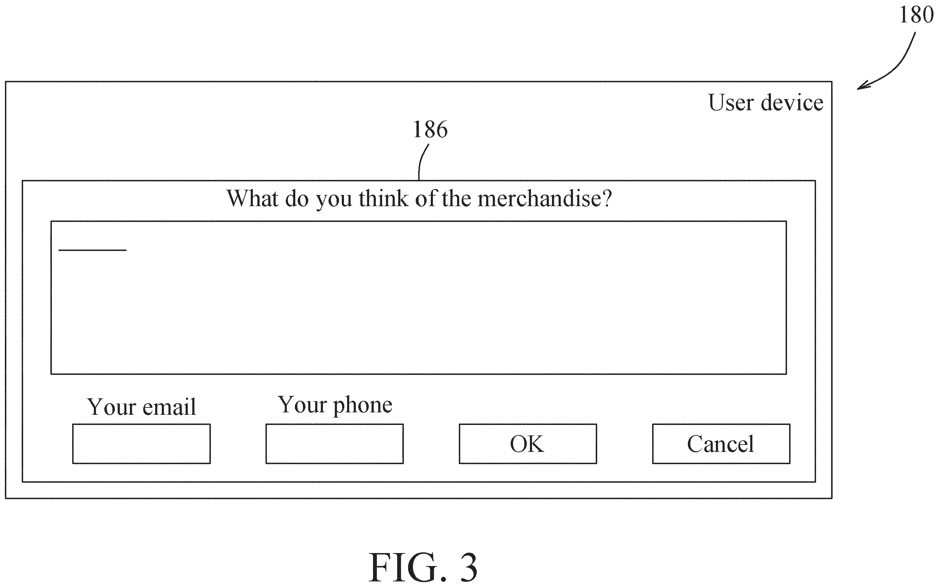

Figure 3 illustrates an exemplary input website according to one embodiment of the disclosure. In the embodiment, the input website may include a plurality of fields, each enabling the passerby to input certain information. In the example of Figure 3, the input website includes a field for inputting a user-input text comment, and one or more field(s) for inputting contact information (e.g., an email address, a phone number, etc.) of the passerby. In other embodiments, the input website may include additional fields for inputting other information.

The user-input text comment may indicate how the passerby thinks of the predetermined merchandise, and may include one or more sentences. After the passerby has filled the fields, he/she may press a button (e.g., the OK button) so as to submit the user-input text comment and the contact information to the server 110.

In response to receipt of the user-input text comment from the user device 180 via the input website, in step 210, the server 110 performs a filtering operation on the user-input text comment, so as to obtain a filtered input string, which is to be used for subsequent advertisement creation.

Specifically, in certain embodiments, the filtering operation may include applying the user-input text comment, by the processor 112, to a filtering neural network model that is pre-trained as an input, so as to filter out parts of the user-input text comment that are deemed to be not suitable for use in generating a user-related advertisement, and to obtain the filtered input string.

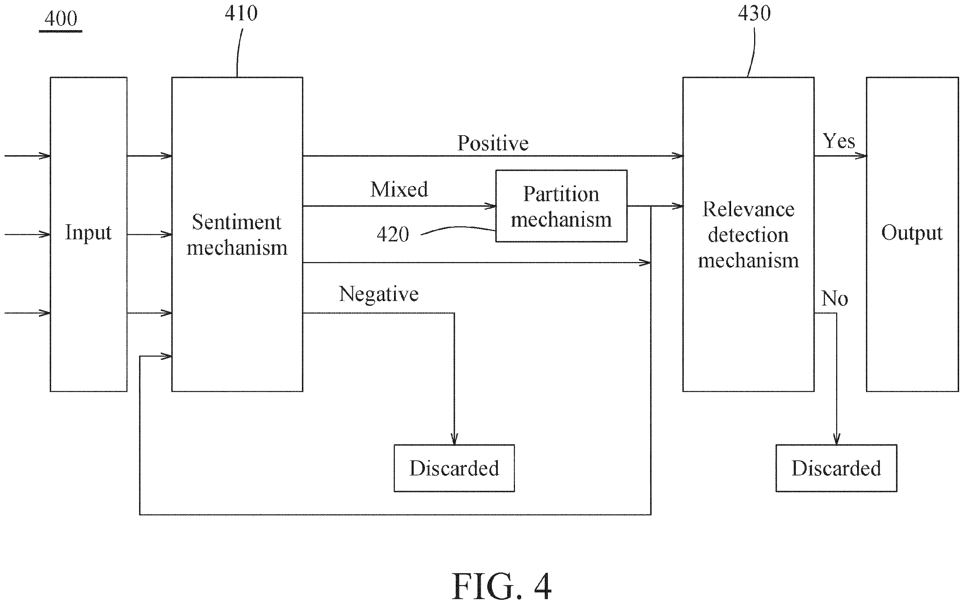

Figure 4 illustrates an exemplary filtering neural network model 400 used for the filtering operation according to one embodiment of the disclosure. In this embodiment, the filtering neural network model 400 may be embodied using, for example, the functions provided by a foundation model such as a GPT-n model developed by OpenAI, Inc., and includes a number of mechanisms that are trained to implement the functions as described below. In other embodiments, the filtering neural network model 400 may be embodied using one or more of a Recurrent Neural Network (RNN), Long Short-Term Memory Network (LSTM) and Convolutional Neural Network (CNN). It is noted that the operations of training the filtering neural network model 400 embodied using the above neural network models may be readily available in the related art, and details thereof are omitted herein for the sake of brevity.

In the embodiment of Figure 4, the filtering neural network model 400 includes a sentiment mechanism 410 that is configured to, in response to receipt of the user-input text comment, determine whether the user-input text comment is associated with a positive sentiment, a negative sentiment, a neutral or ambiguous sentiment (i.e., a sentiment that is difficult to be definitively determined as positive or negative) or a mixed sentiment (i.e., the same user-input text comment containing both positive and negative statements). In the case where one user-input text comment is associated the negative sentiment, that user-input text comment may be discarded. In the case where one user-input text comment is associated the positive sentiment, the neutral sentiment or the mixed sentiment, that user-input text comment is kept for further processing.

Table 1 below lists a number of exemplary user-input text comments from different passersby (hereinafter referred to as "users"), and the determination of the sentiment of each of the user-input text comments.

**Table 1**

| **User** | **The user-input text comment** | **Output from the sentiment mechanism** | **Decision for further processing** |
|---|---|---|---|
| User 1 | It is durable. | The sentiment of the sentence is **positive,** as it suggests that the item being referred to has a long lifespan and is resistant to damage or wear. | Yes |
| User 2 | It is comfortable. | The sentiment of the sentence is **positive,** as it suggests that the item being referred to provides a comfortable experience or is pleasant to use. | Yes |
| User 3 | It is affordable | The sentiment of the sentence is **positive,** as it suggests that the item being referred to is priced reasonably or is within the user's budget. | Yes |
| User 4 | The sun is red | The sentiment of the sentence is **neutral,** as it is a factual statement rather than an expression of emotion or opinion. | Yes |
| User 5 | Quality of this product sucks! | The sentiment of the sentence is negative. | No; discard this user-input text comment |
| User 6 | I freaked out looking at the product | The sentiment of the sentence is **ambiguous** as it does not provide enough context to determine whether the speaker feels positively or negatively. | Yes |
| User 7 | Your jokes are funny | The sentiment of the sentence is **positive,** as it suggests that the speaker finds the jokes to be humorous and enjoyable. | Yes |
| User 8 | The food is good, but the service is slow. | The sentiment in the statement, "The food is good but the service is slow," is mixed. It expresses both a positive sentiment about the food and a negative sentiment about the service. | Yes; split the user-input text comment into shorter sentences |

Afterward, in the case where one user-input text comment with the mixed sentiment is present, the filtering neural network model 400 may apply the user-input text comment with the mixed sentiment into a partition mechanism 420, so as to split the user-input text comment into a plurality of segments. For example, the user-input text comment, "The food is good, but the service is slow," may be split into separate segments, "The food is good" and "The service is slow." Then, the segments are taken back to the sentiment mechanism 410 so as to be processed separately, where the segments associated the negative sentiment (i.e., service is late) are discarded.

In some embodiments, in addition to the user-input text comment with the mixed sentiment, in the cases where the user-input text comment includes a plurality of sentences or a long paragraph, the processor 112 may first apply the partition mechanism 420 on the user-input text comment so as to split the user-input text comment into a plurality of different segments. Then, the processor 112 may feed each of the segments into the filtering neural network model 400 as an input, and the sentiment mechanism 410 may process each of the segments in a manner as described above. In this configuration, the chances of obtaining a user-input text comment with the mixed sentiment may be reduced.

Then, the user-input text comment or a segment that is not discarded is fed into a relevance detection mechanism 430, so as to determine whether the user-input text comment or the segment is related to a user experience of the predetermined merchandise.

For example, in one embodiment, the predetermined merchandise may be merchandise sold in a brick-and-mortar store, and the user-input text comments collected in Table 1 may be processed to determine whether the user-input text comments make sense in the context of the predetermined merchandise. In the cases where it is determined that the user-input text comment or the segment is indeed related to the user experience of the predetermined merchandise, the user-input text comment or the segment is then outputted as a filtered input string, which is available to be used for generating a user-related advertisement.

Table 2 below illustrates some user-input text comments with the positive sentiment being processed by the relevance detection mechanism 430. In Table 2, the determination is done by asking a yes-or-no question, "Can the user-input text comment or the segment be logically combined with the phrase of 'shopping at Acme store'?"

**Table 2**

| **Input given to the relevance detection mechanism** | **Response from the relevance detection mechanism** | **Decision for further processing** |
|---|---|---|
| Can sentences, "It is durable" and "shopping at Acme store," be logically combined? | Yes | Yes; output as a filtered input string |
| Can sentences, "It is comfortable" and "shopping at Acme store," be logically combined? | Yes | Yes; output as a filtered input string |
| Can sentences, "It is affordable" and "shopping at Acme store." be logically combined? | Yes | Yes; output as a filtered input string |
| Can sentences, "The food is good" and "shopping at Acme store," be logically combined? | No | No; discard the user-input text comment |
| Can sentences, "Your jokes are funny" and "shopping at Acme store," be logically combined? | No | No; discard the user-input text comment |

It is seen from the Table 2 that the user-input text comments, "The food is good" and "Your jokes are funny," cannot be logically combined with the experience of shopping, and therefore are discarded. Other user-input text comments are outputted as filtered input strings.

Table 3 below illustrates some user-input text comments with the neutral or ambiguous sentiments being processed by the relevance detection mechanism 430. In the Table 3, the determination is similarly done by asking a yes-or-no question, "Can the user-input text comment or the segment be logically combined with the phrase of 'shopping at Acme store'?" In the cases where a combination is possible, a resulting combined sentence is then fed back into the sentiment mechanism 410 for processing, where the combined sentence associated the negative sentiment is discarded.

**Table 3**

| **Input given to the relevance detection mechanism** | **Response from the relevance detection mechanism** | **Decision for further processing** |
|---|---|---|
| Can sentences, "The sun is red" and "shopping at Acme store," be logically combined? | No | No; do not proceed to next step |
| Can sentences, "I feel dazzled" and "shopping at Acme store," be logically combined? | Yes | Yes; proceed to determine sentiment of combined sentence of "I feel dazzled shopping at Acme store." |

Table 4 below shows the combined sentence being processed by the sentiment mechanism 410. In the cases where the sentiment is determined to be positive, the combined sentence is then outputted as a filtered input string.

**Table 4**

| **Input given to sentiment mechanism** | **Response from sentiment mechanism** | **Decision to further process** |
|---|---|---|
| Identify the sentiment of sentence: "I feel dazzled shopping at Acme store." | The sentiment of the sentence is positive, as it suggests that the user enjoys shopping at Acme store and feels enthusiastic or excited while doing so. | Yes; output as a filtered input string |

After the above filtering operation is completed, a number of filtered input strings become available for generating the user-related advertisement. As a result, the flow proceeds to step 212, in which the processor 112 of the server 110 use the filtered input strings as an input in a generative neural network model, so as to obtain an advertising text file as an output of the generative neural network model.

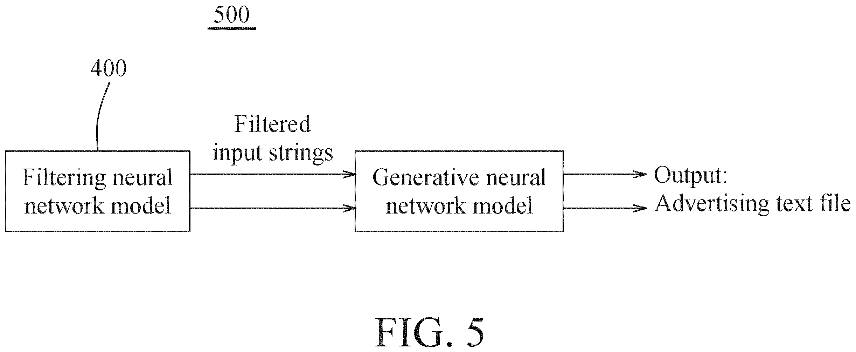

Figure 5 illustrates an exemplary generative neural network model 500 according to one embodiment of the disclosure. In this embodiment, the generative neural network model 500 may be embodied using commercially available generative neural network models (e.g., ChatGPT), but is not limited to such.

In some embodiments, the operations of step 212 may be implemented by applying the filtered input strings as an input into a generative neural network model, along with a prompt, "Please prepare a poem or a prose about the experience of shopping at Acme store. The following filtered input strings must be included."

In one example, the merchandise is related to food in a specific restaurant (e.g., McDonald's^{®}), and the filtered input strings, "I love the food," "I love the taste," and "The food is good," are obtained using the process as described above.

In this example, the advertising text file outputted by the generative neural network model 500 may be, "I love the food, and I love the taste, it's something that I can't deny, McDonald's is my happy place. The food is good, and McDonald's is great, with plenty of options. There's no reason to hesitate, so why not stop by and indulge in a treat, I promise you'll love it, and it'll be a delicious feast." It is noted that with different prompts, different filtered input strings and different merchandise, the resulting advertising text files outputted by the generative neural network model 500 may be different.

In another example, the merchandise is related to aviation service provided by a specific airline (e.g., Emirates^{®}), and the filtered input strings, "I feel high" "I feel blessed," and "You make me happy," are obtained using the process as described above.

In this example, the advertising text file outputted by the generative neural network model 500 may be, "I'm soaring high with glee, feeling blessed and feeling free. With you, my heart is full. You make me happy, it's never dull. Let's fly Emirates, my love, to new horizons and beyond. Together we'll see the world. Our love, forever unfurled."

In another example, the merchandise is related to shopping in a specific store (e.g., IKEA^{®}), and the filtered input strings, "It is durable," "It is comfortable," "It's affordable," and "Shop at Ikea," are obtained using the process as described above.

In this example, the advertising text file outputted by the generative neural network model 500 may be, "At Ikea you will find furniture of a unique kind, durable, comfortable, authentic, and affordable too, for you and me."

In the case where a large number of user-input text comments are received and a large number of filtered input strings are generated accordingly, the filtered input strings may be arranged into a number of groups each containing a smaller number of filtered input strings. As such, the operations of step 212 may be then implemented with respect to each of the groups to generate a plurality of advertising text files.

After the advertising text file is generated, in step 214, the processor 112 of the server 110 proceeds to generate a user-related advertisement for the predetermined merchandise based on at least the advertising text file, and to transmit the user-related advertisement to the public display device 160.

Specifically, in some embodiments, the user-related advertisement may include the advertising text file and a logo of the associated merchandise. Alternatively, the user-related advertisement may include the advertising text file and an existing advertisement of the associated merchandise.

In some embodiments, for each merchandise, the database of the data storage unit 114 may store a plurality of merchandise multimedia files, such as video files, audio files, and images related to the merchandise. Each of the merchandise multimedia files may be associated with one or more associated words. As such, when the filtered input strings includes an associated word of one of the merchandise multimedia files, that one of the merchandise multimedia files may then be used for generating the user-related advertisement. In the case where a plurality of advertising text files are generated, multiple user-related advertisements may be also created for the same associated merchandise.

After the user-related advertisement is generated, in step 216, the processor 112 of the server 110 transmits the user-related advertisement to the public display device 160, and in response of receipt of the user-related advertisement, the public display device 160 may display the user-related advertisement thereon.

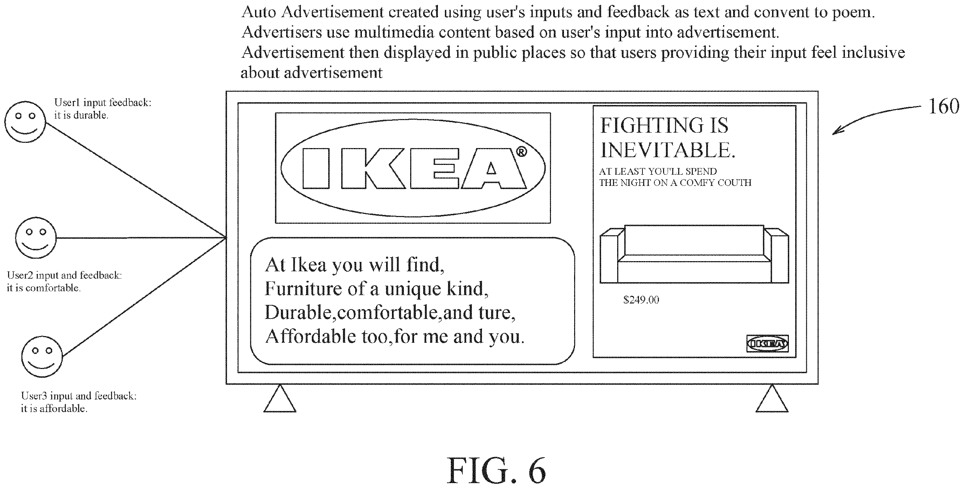

In one example, Figure 6 illustrates one exemplary user-related advertisement that is displayed by the public display device 160. In the example of Figure 6, the user-related advertisement includes a logo of the company providing the merchandise (i.e., IKEA^{®}), an image illustrating a promotion of a specific product, and the advertising text file.

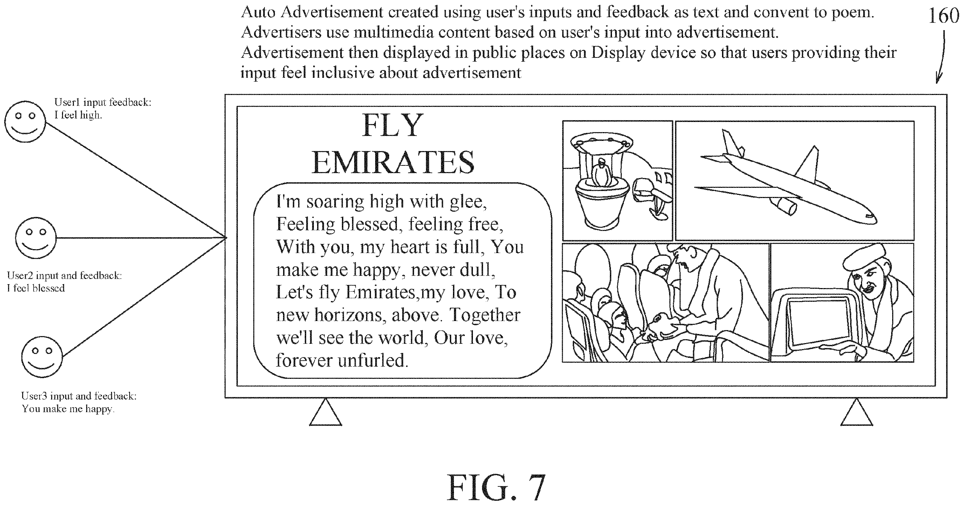

In another example, Figure 7 illustrates one exemplary user-related advertisement that is displayed by the public display device 160. In the example of Figure 7, the user-related advertisement includes a logo of the company providing the merchandise (i.e., Emirates^{®}), a plurality of images promoting the service of the company, and the advertising text file.

In some embodiments, the input website may further enable the user to upload a user multimedia file (e.g., a photo of the user, a video and/or audio file recorded by the user to describe the user experience, etc.) using the user device 180, and the server 110 may store the user multimedia file in the database of the data storage unit 114. As such, after the advertising text file is generated, the user-related advertisement may be created further using the user multimedia file. In some embodiments, the input website may provide a request for consent by the user uploading the user multimedia file.

In response to receipt of the user multimedia file, the server 160 may first process the user multimedia file. In some embodiments, the input website may be embedded with instructions for processing the user multimedia file. In some examples where the user multimedia file is an image, the image may be cropped such that only the face of the user is shown. In the case where a plurality of faces are detected, the image may be cropped such that only the faces are shown. The image may be applied to a filter to determine whether an inappropriate content is present. In the case where a plurality of images are uploaded, the input website may select one of the images for use.

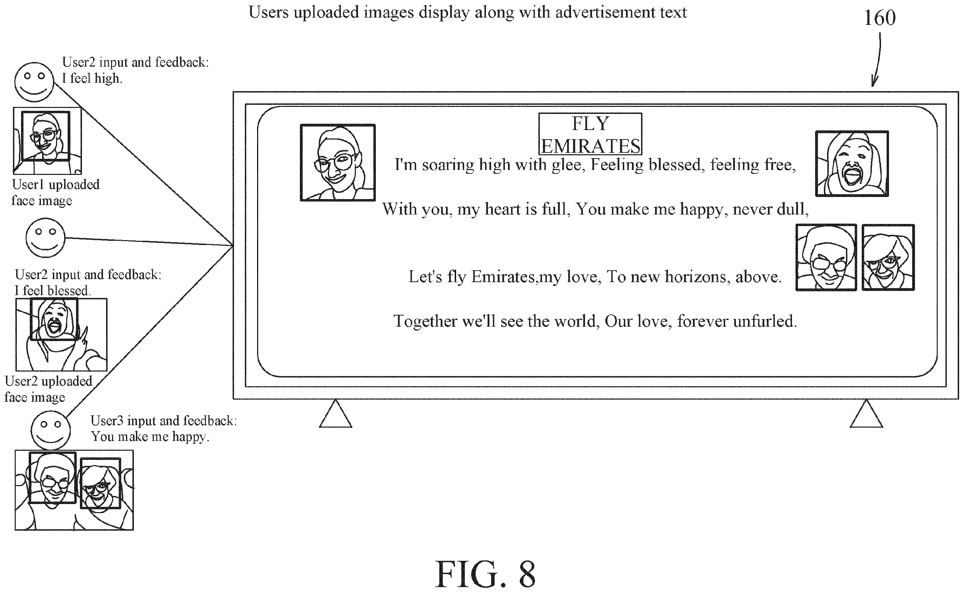

Figure 8 illustrates one exemplary user-related advertisement that is displayed by the public display device 160. In the example of Figure 8, the user-related advertisement includes a logo of the company providing the merchandise (i.e., Emirates^{®}), the advertising text file, and images of the user that provide the user-input text comments used for generating the advertising text file.

In some embodiments, after the user-related advertisement is successfully created, the processor 112 of the server 110 may proceed to provide a reward token to the user device 180 whose owner provides the user-input text comments used for generating the advertising text file. The reward token may then be redeemed for purchasing the merchandise associated with the user-related advertisement. As such, the merchandise may be further promoted to the users who already have a positive feeling regarding the merchandise, in a manner similar to a loyalty program.

In some embodiment, after a user-input text comment with a negative sentiment is detected, the processor 112 of the server 110 may send a message to the associated user (given if the user provided his/her email of phone number) to ask for further feedback regarding his/her user experience. As such, the company providing the merchandise may be made aware of potential issues of the merchandise.

In sum, the embodiments of the disclosure provide a method and a system for a method and a system for creating an advertisement based on user input. In the method, a number of public display devices installed on different public locations may present links to passersby for providing input for a specific merchandise. After receiving a user-input text comment, a server performs a filtering operation so as to obtain a filtered input string, and feeds the filtered input string as an input into a generative neural network model, so as to obtain an advertising text file as an output of the generative neural network model. Then, the server generates a user-related advertisement for the specific merchandise based on at least the advertising text file. The user-related advertisement is then displayed by the public display devices. In this manner, the resulting user-related advertisement may be more accessible to the public since the content of the user-related advertisement is directly obtained from the user experience of users. In some embodiments, a more personal user-related advertisement with a user multimedia file included may be created so common users may identify with the specific merchandise in the user-related advertisement.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for creating an advertisement based on user input, the method being implemented using a server and a public display device that is placed in a public location and that is in communication with the server, the method being **characterized by**:
transmitting, by the server, a link to the public display device, the link being associated with an input website for inputting user-input text comments about a predetermined merchandise;
displaying, by the public display device, the link thereon;
in response to receipt of a user-input text comment from a user device via the input website, performing, by the server, a filtering operation on the user-input text comment so as to obtain a filtered input string;
feeding, by the server, the filtered input string as an input into a generative neural network model, so as to obtain an advertising text file as an output of the generative neural network model;
generating, by the server, a user-related advertisement for the predetermined merchandise based on at least the advertising text file, and transmitting the user-related advertisement to the public display device; and
displaying, by the public display device, the user-related advertisement.

2. The method as claimed in Claim 1, further including:
in response to receipt of the link, encoding, by the public display device, the link in a two-dimensional code readable by the user device, and further displaying the code; wherein the two-dimensional code is a Quick Response (QR) code.

3. The method as claimed in any one of Claims 1 and 2, wherein the filtering operation includes determining whether the user-input text comment is associated with a positive sentiment, a negative sentiment or a mixed sentiment, and discarding the user-input comment associated with the negative sentiment.

4. The method as claimed in Claim 3, wherein the filtering operation further includes determining whether the user-input text comment is related to a user experience of the predetermined merchandise, and discarding the user-input text comment that is not related to the user experience of the predetermined merchandise.

5. The method as claimed in Claim 3, wherein the filtering operation further includes splitting the user-input comment into a plurality of segments, and determining, with respect to each of the segments, whether the segment is associated with the positive sentiment, the negative sentiment or the mixed sentiment.

6. The method as claimed in any one of Claims 1 to 5, further including a step of receiving, by the server, a user multimedia file from the user device via the input website,
wherein the generating of the user-related advertisement is further based on the user multimedia file.

7. The method as claimed in any one of Claims 1 to 6, the server including a database storing a merchandise multimedia file for the predetermined merchandise, wherein the generating of the user-related advertisement is further based on the merchandise multimedia file.

8. The method as claimed in any one of Claims 1 to 7, wherein the method further includes providing a reward token to the user device after generating the user-related advertisement based on the advertising text file.

9. A system for creating an advertisement based on user input, the system including a server and a public display device that is placed in a public location and that is in communication with the server, **characterized in that**:
the server transmits a link to the public display device, the link being associated with an input website for inputting user-input text comments about a predetermined merchandise;
the public display device displays the link thereon;
in response to receipt of a user-input text comment from a user device via the input website, the server performs a filtering operation on the user-input text comment so as to obtain a filtered input string;
the server feeds the filtered input string as an input into a generative neural network model, so as to obtain an advertising text file as an output of the generative neural network model;
the server generates a user-related advertisement for the predetermined merchandise based on at least the advertising text file, and transmitting the user-related advertisement to the public display device; and
the public display device displays the user-related advertisement.

10. The system as claimed in Claim 9, wherein:
in response to receipt of the link, the public display device encodes the link in a two-dimensional code readable by the user device, and further displays the code; wherein the two-dimensional code is a Quick Response (QR) code.

11. The system as claimed in any one of Claims 9 and 10, wherein the filtering operation includes determining whether the user-input text comment is associated with a positive sentiment, a negative sentiment or a mixed sentiment, and discarding the user-input comment associated with the negative sentiment.

12. The system as claimed in any one of Claims 9 and 10, wherein the filtering operation further includes determining whether the user-input text comment is related to a user experience of the predetermined merchandise, and discarding the user-input text comment that is not related to the user experience of the predetermined merchandise.

13. The system as claimed in any one of Claims 9 and 10, wherein the filtering operation further includes splitting the user-input comment into a plurality of segments, and determining, with respect to each of the segments, whether the segment is associated with the positive sentiment, the negative sentiment or the mixed sentiment.

14. The system as claimed in any one of Claims 9 to 13, wherein the server further receives a user multimedia file from the user device via the input website,
wherein the generating of the user-related advertisement is further based on the user multimedia file.

15. The method of system as claimed in any one of Claims 9 to 14, wherein the server includes a database storing a merchandise multimedia file for the predetermined merchandise, wherein the generating of the user-related advertisement is further based on the merchandise multimedia file.
